# EUROPÄISCHE PATENTANMELDUNG

(11) **EP 1 992 581 A2**
(43) Veröffentlichungstag der Anmeldung: **19.11.2008**
(21) Anmeldenummer: 08002579.4
(22) Anmeldetag: 12.02.2008
(51) Int. Cl.: B65H 61/00, B65H 75/36, H02G 11/00

(54) **Verfahren zum Speichern eines schlauch- oder kabelförmigen Gegenstands sowie Speicher für einen schlauch- oder kabelförmigen Gegenstand**

(30) Priorität: 12.12.2006 DE 102006058775
(71) Anmelder: Schleuniger Holding AG, 3608 Thun (CH)
(72) Erfinder: Kiener, Stefan, 73466 Lauchheim (DE)
(74) Vertreter: Rosenich, Paul

(57) **Zusammenfassung**

Die Erfindung betrifft ein Verfahren zum Speichern eines schlauch- oder kabelförmigen Gegenstandes sowie einen Speicher für einen schlauch- oder kabelförmigen Gegenstand (12), bei welchem eine Zwischenspeicherung des Gegenstandes (12) und ein Arbeiten nach dem First-In-First-Out- und First-In-Last-Out-Prinzip durch einen definiert zum Gehäuse (14) des Speichers (11) angeordneten Anfang (31) oder Ende des schlauch- oder kabelförmigen Gegenstandes (12) ermöglicht ist.

## Beschreibung

Die Erfindung betrifft ein Verfahren zum Speichern eines schlauch- oder kabelförmigen Gegenstandes sowie einen Speicher für einen schlauch- oder kabelförmigen Gegenstand, der zur Weiterverarbeitung vorgesehen sind.

In der heutigen Kabelverarbeitung werden zu verarbeitende Kabel vorwiegend auf Rollen oder Trommeln gewickelt oder in Fässern gespeichert angeliefert. Aus diesen Speichern werden dem Anwendungsfall entsprechend verschiedene Kabelabschnitte abgerollt oder entnommen und anschließend abgeschnitten. Im gleichen oder nachfolgenden Arbeitsgang werden die Kabelenden bearbeitet, wie beispielsweise abgemantelt, abisoliert, verzinkt, vercrimpt oder mit einem Stecker angeschlagen. Um eine hohe Taktzeit bei der Verarbeitung von Kabeln und deren Kabelenden zu ermöglichen, werden solche Kabel mit einer vorbestimmten Länge nach dem Abrollen von einer Trommel oder der Entnahme von Fässern zwischengespeichert. Solche Zwischenspeicher werden bislang durch Gestelle mit einem Gestänge gebildet, an welchem die Kabel mit einer vorgefertigten Länge aufgehängt werden. Alternativ sind große offene Wannen vorgesehen, in denen die einzelnen Kabel aufgelegt sind. Solche Zwischenspeicher ermöglichen, dass der Abwickelvorgang des Endloskabels und eine nachfolgende Bearbeitung des Kabels durch eine oder mehrere Bearbeitungsstationen entkoppelt wird, um hohe Taktzeiten zur Herstellung zu erzielen.

Eine solche Zwischenspeicherung weist den Nachteil auf, dass zumeist ein zusätzliches manuelles Handling erforderlich ist, welches kostenintensiv ist. Oftmals geht die Position von Kabelanfang und Kabelende verloren. Dadurch ist die automatische Weiterverarbeitung ohne nochmaliges manuelles Handling nicht möglich. Darüber hinaus besteht beim Einlegen und Herausnehmen der Kabelabschnitte in und aus dem Gestell beziehungsweise der Wanne eine Gefahr der Beschädigung des Kabels oder der gegenseitigen Verhakung, wodurch wiederum ein nicht-wertschöpfendes manuelles Handling erforderlich ist.

Der Erfindung liegt deshalb die Aufgabe zugrunde, ein Verfahren zum Speichern oder Zwischenspeichern eines schlauch- oder kabelförmigen Gegenstandes sowie einen Speicher für einen schlauch- oder kabelförmigen Gegenstand zu schaffen, wodurch eine kostengünstige Pufferung mit einer kurzen Befüll- und Entnahmezeit in und aus dem Speicherraum für die Weiterverarbeitung des schlauch- oder kabelförmigen Gegenstandes ermöglicht ist.

Diese Aufgabe wird erfindungsgemäß durch ein Verfahren zum Speichern eines schlauch- oder kabelförmigen Gegenstandes gemäß den Merkmalen des Anspruchs 1 ermöglicht. Bei dieser ersten Ausführungsform des Verfahrens ist vorgesehen, dass ein Anfang des schlauch- oder kabelförmigen Gegenstandes, der auf einer Trommel oder in Fässern gespeichert ist, in eine zum Speicherraum führende Eingangsöffnung eingeführt und der Speicherraum mit dem Gegenstand befüllt wird. Der Speicherraum erstreckt sich in einer Ebene und weist eine Höhe auf, die eine nur einlagige Aufnahme des Gegenstandes ermöglicht. Dadurch bildet sich eine beliebige schlaufen- oder laschenförmige Anordnung innerhalb des Speicherraumes. Ein Ende des Gegenstandes wird durch eine der Eingangsöffnung zugeordnete Halte- oder Transportvorrichtung fixiert und von dem endlosen Gegenstand auf der Trommel oder in den Fässern getrennt. Somit ist das Ende des Gegenstandes mit einer vorbestimmten Länge außerhalb des Speicherraums fixiert und weist eine definierte Lage zur Weiterverarbeitung auf. Der gespeicherte Gegenstand weist eine definierte Länge auf. In dem Speicherraum ist eine zufällige Anordnung des Gegenstandes, jedoch auch eine schnelle Entnahme aufgrund der einlagigen Anordnung ohne eine Verknäuelung oder Verklemmung gegeben. Dieses Verfahren ermöglicht eine Speicherung oder Zwischenspeicherung, bei dem nach dem First-in-Last-Out-Prinzip gearbeitet wird.

Die Aufgabe der Erfindung wird alternativ durch ein Verfahren gemäß den Merkmalen des Anspruchs 2 gelöst. Bei diesem Verfahren wird ein Anfang des schlauch- oder kabelförmigen Gegenstandes durch eine zum Speicherraum führende Eingangsöffnung eingeführt, wobei der Anfang des vorzugsweise endlos gespeicherten Gegenstandes von einer Trommel abgewickelt oder aus den Fässern abgezogen wird. Nach dem Durchqueren der Eingangsöffnung wird der Gegenstand von einer Führungsvorrichtung einer Ausgangsöffnung des Speicherraumes zugeführt. Der Anfang des Gegenstandes wird durch eine an der Ausgangsöffnung zugeordnete Halte- oder Transportvorrichtung zum Ausgang fixiert. Anschließend wird der Speicherraum gefüllt, wobei vorgesehen ist, dass der Speicherraum in der Höhe auf den Durchmesser des zu speichernden Gegenstandes einstellbar ist, so dass eine einlagige Aufnahme des Gegenstandes folgt. Durch diese Abfolge der Verfahrensschritte wird ermöglicht, dass wiederum der Anfang des Gegenstandes in einer definierten Lage mit einer vorbestimmten Länge zur Ausgangsöffnung angeordnet und der Gegenstand mit einer definierten Länge in dem Speicherraum aufgenommen wird. Dadurch wird eine automatische Weiterverarbeitung des zwischengespeicherten Gegenstandes in einfacher Weise ermöglicht. Dieser Speicher arbeitet nach dem First-In-First-Out-Prinzip.

Nach einer weiteren vorteilhaften Ausgestaltung des Verfahrens ist vorgesehen, dass ein Ende des schlauch- oder kabelförmigen Gegenstandes durch eine an der Eingangsöffnung angeordnete Klemmeinrichtung oder Transporteinrichtung fixiert ist. Somit ist sowohl der Anfang als auch das Ende des schlauch- oder kabelförmigen Gegenstandes in einer definierten Lage mit einer vorbestimmten Länge zum Speicherraum angeordnet. Dadurch kann der Speicher sowohl nach dem First-In-Last-Out-Prinzip oder nach dem First-In-First-Out-Prinzip arbeiten.

Nach einer weiteren bevorzugten Ausgestaltung der Erfindung ist vorgesehen, dass eine in dem Speicherraum angeordnete Führungsvorrichtung nach dem Fixieren des Anfangs des Gegenstandes an der Ausgangsöffnung aus dem Speicherraum herausgeführt wird. Dadurch wird der Speicherraum in seiner vollen Größe freigegeben, so dass die den Speicherraum durchquerende Führungsvorrichtung die Speicherkapazität nicht begrenzt oder die Speicherung behindert.

Des Weiteren ist bevorzugt vorgesehen, dass der Speicherraum durch eine Transportvorrichtung befüllt wird, die der Eingangsöffnung zugeordnet ist. Dies ermöglicht eine schnelle Befüllung des Speichers beziehungsweise des Zwischenspeichers, da der Gegenstand durch eine Schiebebewegung in den Speicherraum gelangt. Darüber hinaus kann dadurch auch das Ende des Gegenstandes in einer definierten Lage positioniert sein, so dass der Zwischenspeicher wahlweise nach dem First-In-Last-Out-Prinzip oder nach dem First-In-First-Out-Prinzip in einer Montageautomation einsetzbar ist.

Bevorzugt wird bei dem erfindungsgemäßen Verfahren zur Speicherung eines Gegenstandes während dem Befüllen des Speicherraumes die Länge des zugeführten Gegenstandes erfasst. Dadurch erfolgt gleichzeitig mit einer solchen Speicherung ein Arbeitsschritt für die Konfektionierung der Länge von schlauch- oder kabelförmigen Gegenständen.

Nachdem die vorbestimmte Länge des Gegenstandes erfasst wurde, wird der Gegenstand auf die gewünschte Länge abgeschnitten. Der Gegenstand wird bevorzugt dem Speicherraum derart zugeführt, dass ein Ende oder ein Anfang mit einer definierten Länge außerhalb des Speicherraumes verbleibt und eine automatische Weiterverarbeitung ermöglicht.

Die Aufgabe wird erfindungsgemäß durch einen Speicher gemäß den Merkmalen des Anspruchs 7 gelöst. Der erfindungsgemäße Speicher für schlauch- oder kabelförmige Gegenstände weist in einem Gehäuse einen Speicherraum auf, der für den Gegenstand über eine Eingangsöffnung zugänglich ist und über die Eingangs- oder Ausgangsöffnung entnommen wird. Der Speicherraum umfasst einen ebenen Boden, der durch seitliche Wandabschnitte begrenzt ist und weist eine parallel zum Boden ausgerichtete Abdeckung auf. Die Höhe des Speicherraumes ist an den Außendurchmesser des zu speichernden Gegenstandes angepasst, damit der Gegenstand sich in der Ebene des Speicherraumes frei bewegen kann, jedoch eine zweilagige oder mehrlagige Anordnung des Gegenstandes nicht ermöglicht wird. Vielmehr ist die Höhe des Speicherraums für die einlagige Speicherung des Gegenstandes vorgesehen. Dadurch wird sichergestellt, dass der Gegenstand in dem Speicher eine zufällige schlaufen-, mäander- oder laschenförmige Anordnung einnimmt, die eine schnelle Entnahme aus dem Speicherraum ermöglicht. Der Speicherraum ist für einen Gegenstand mit einer vordefinierten Länge vorgesehen und dient beispielsweise als Zwischenspeicher in einer Montage- und/oder Konfektionierungsanlage.

In dem Speicherraum ist nach einer bevorzugten Ausgestaltung der Erfindung eine Führungsvorrichtung vorgesehen, welche zum Überführen eines die Eingangsöffnung des Speicherraumes durchquerenden Anfanges des Gegenstandes zur Ausgangsöffnung dient. Dadurch wird der in dem Speicherraum eingeführte Anfang des Gegenstandes kontrolliert zur Ausgangsöffnung des Speicherraumes geführt und am Ende des Speicherraumes bevorzugt fixiert, so dass anschließend ein schneller Befüllvorgang des Speicherraumes ermöglicht ist.

Die Führungsvorrichtung ist gemäß einer ersten Ausführungsform als Rinne ausgebildet, welche beispielsweise eine U-, V-förmige Rinne oder eine halbkreisförmige Rinne mit einem runden oder mehreckigen Verlauf umfasst. Dadurch kann durch eine einfache Schiebebewegung eine Überführung des Anfangs des Gegenstandes von der Eingangsöffnung zur Ausgangsöffnung des Speichers ermöglicht sein.

Durch eine solche rinnenförmige Führungsvorrichtung, die den Speicherraum vollständig durchquert und sich über die Höhe des Speicherraumes erstreckt, ist bevorzugt vorgesehen, dass nach dem Überführen des Anfangs des Gegenstandes zur Ausgangsöffnung des Speicherraumes die Führungsvorrichtung durch eine Hubbewegung aus dem Speicherraum herausführbar ist und der Gegenstand sich während dem Befüllen beliebig einlagig in dem Speicherraum anordnen kann.

Nach einer weiteren bevorzugten Ausgestaltung der als Rinne ausgebildeten Führungsvorrichtung ist vorgesehen, dass diese Rinne schwenkbar angeordnete Seitenwandabschnitte aufweist, welche nach dem Überführen des Anfangs des Gegenstandes zur Ausgangsöffnung des Speichers parallel zum Boden oder zur Abdeckung des Speicherraumes schwenkbar sind. Dadurch wird eine kompakte Anordnung eines Speicherraumes mit einer darin angeordneten Führungsvorrichtung ermöglicht.

Nach einer weiteren alternativen Ausgestaltung der Führungsvorrichtung ist vorgesehen, dass diese als Linearachse mit einer Klemm- oder Greifeinrichtung ausgebildet ist. Nachdem der Anfang des Gegenstandes die Eingangsöffnung des Speicherraumes durchquert hat, wird der Anfang des Gegenstandes durch die Klemm- oder Greifeinrichtung an einer Linearachse oder einer Schiebeeinrichtung ergriffen und zur Ausgangsöffnung des Speicherraumes geführt.

Die Höhe des Speicherraumes ist bevorzugt durch eine an der Abdeckung und/oder des Bodens angreifende Justiervorrichtung vorgesehen, wobei die Abdeckung und/oder der Boden in der Höhe des Speicherraumes verfahrbar zu den seitlichen Wandabschnitten angeordnet sind.

Diese Einstellung der Höhe des Speicherraumes ist bevorzugt durch eine Justiereinrichtung vorgesehen, die manuell oder automatisch einstellbar ist. Die Höhe des Speicherraumes wird dabei bevorzugt nur geringfügig größer als der Durchmesser des kabel- oder schlauchförmigen Gegenstandes eingestellt, so dass der Gegenstand in der Ebene frei bewegbar ist, jedoch ein sich Übereinanderlagern mit Sicherheit verhindert wird.

Des Weiteren ist bevorzugt vorgesehen, dass die Eingangsöffnung des Speicherraumes eine zur Außenseite des Gehäuses weisende trichterförmige Geometrie aufweist. Dadurch wird ein Fangtrichter geschaffen, so dass eine automatische Zuführung eines Anfanges des Gegenstandes in den Speicherraum erleichtert ist.

Nach einer weiteren bevorzugten Ausgestaltung des Speichers ist vorgesehen, dass die Ausgangsöffnung des Speicherraumes eine zum Speicherraum weisende Einführungsgeometrie für die Ausgangsöffnung zur Entnahme des Gegenstandes aufweist. Diese Einführungsgeometrie kann in der Ausgangsöffnung beziehungsweise in den die Ausgangsöffnung umgebenden Wandabschnitten integriert oder durch zusätzliche Leitbleche, Führungselemente oder dergleichen vorgesehen werden. Dadurch wird ein Knicken oder eine Streckung des Gegenstandes während der Entnahme des Gegenstandes aus dem Speicherraum verhindert.

Des Weiteren ist bevorzugt vorgesehen, dass die Innenwandabschnitte des Speicherraumes aus einem gleitfähigen Material ausgebildet oder mit einer Gleitschicht beschichtet sind. Dadurch kann die Befüllung und Entnahme des Gegenstandes erleichtert und beschleunigt werden.

Des Weiteren ist bevorzugt vorgesehen, dass am Gehäuse zur Ober- oder Unterseite weisende Aufnahmeelemente vorgesehen sind, welche in komplementäre Aufnahmeelemente eines darüber oder darunter angeordneten Gehäuses zur stapelbaren Anordnung eingreifen. Dadurch können die Zwischenspeicher in einfacher Weise für die Weiterverarbeitung an Einsatzorten vorgesehen sein, die räumlich getrennt zur Anlieferung von Speichertrommeln oder Speicherfässern vorgesehen sind.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Ansicht von oben auf einen erfindungsgemäßen Speicher,
- Figur 2: eine schematische Seitenansicht des Speichers gemäß Figur 1,
- Figur 3: eine schematische Schnittdarstellung des Speichers gemäß Figur 1 entlang der Linie III-III,
- Figur 4: eine schematische Ansicht von oben auf einen befüllten Speicher gemäß Figur 1,
- Figur 5: eine schematische Schnittdarstellung des Speichers mit einer alternativen Ausführungsform einer Führungsvorrichtung zu Figur 3,
- Figur 6: eine schematische Schnittdarstellung des Speichers mit einer alternativen Ausführungsform einer Führungsvorrichtung zu Figur 3,
- Figur 7: eine schematische Draufsicht auf einen Speicher gemäß Figur 1 mit einer weiteren alternativen Führungsvorrichtung und
- Figur 8: eine schematische Seitenansicht von übereinandergestapelten Speichern gemäß Figur 1.

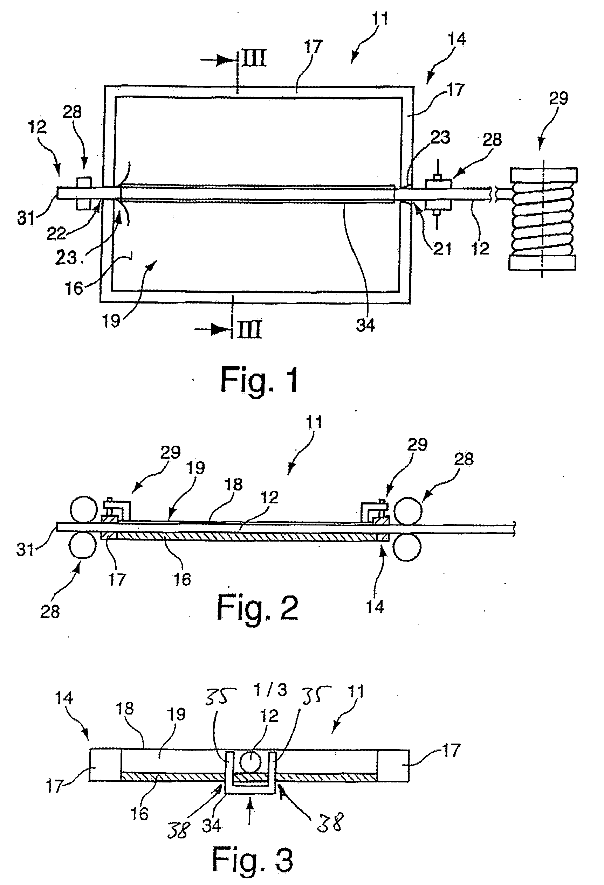

In Figur 1 ist eine schematische Draufsicht auf einen Speicher 11 für schlauch- oder kabelförmige Gegenstände 12 dargestellt. Die Figur 2 zeigt schematisch eine Schnittdarstellung des Speichers 11 in Figur 1. Der Speicher 11 umfasst ein Gehäuse 14, welches aus einem Boden 16, seitlichen Wandabschnitten 17 und einer Abdeckung 18 besteht. Der Boden 16, die seitlichen Wandabschnitte 17 und die Abdeckung 18 schließen einen Speicherraum 19 des Gehäuses 14 ein. Dieser Speicherraum 19 ist bevorzugt quadratisch oder rechteckförmig in seiner Grundfläche ausgebildet. Alternativ können auch runde, ovale oder ähnliche Grundflächen vorgesehen sein, die sich in der Ebene parallel zum Boden 16 und der Abdeckung 18 erstrecken. In den seitlichen Wandabschnitten 17 ist eine Eingangsöffnung 21 und eine Ausgangsöffnung 22 vorgesehen, wobei die Eingangsöffnung 21 und die Ausgangsöffnung 22 vorzugsweise einander gegenüberliegend an den seitlichen Wandabschnitten 17 vorgesehen sind. Bevorzugt liegen die Eingangsöffnung 21 und die Ausgangsöffnung 22 auf derselben Achse. Die Eingangsöffnung 21 weist zur Außenseite des Gehäuses 14 in eine trichterförmige Öffnung auf. Die Ausgangsöffnung 22 weist bevorzugt eine in den Speicherraum 19 gerichtete Einführgeometrie 23 auf, die beispielsweise durch Leitbleche oder Führungselemente ausgebildet ist. Die Abdeckung 18 ist durch eine Justiereinrichtung 26 im Abstand zum Boden 16 einstellbar. Alternativ kann die Justiereinrichtung 26 nur am Boden 16 oder am Boden 16 und der Abdeckung 18 vorgesehen sein. Diese Justiereinrichtung 26 ist manuell oder automatisch ansteuerbar und ermöglicht eine Einstellung in der Höhe im Millimeterbereich.

Der Eingangsöffnung 21 zugeordnet ist eine Transportvorrichtung 28, welche den Gegenstand 12 von einer Vorratstrommel beziehungsweise Trommel 31 oder einer dem Speicher 11 vorgelagerten Bearbeitungsstation abzieht. Diese Transportvorrichtung 28 führt einen Anfang 31 des Gegenstandes 12 der Eingangsöffnung 21 zu, so dass ein Befüllen des Speicherraumes 19 ermöglicht ist. An der Ausgangsöffnung 22 kann ebenfalls eine Transportvorrichtung 28 vorgesehen sein, um den Anfang 31 des Gegenstandes 12 zu fixieren, so dass beim Befüllen des Speicherraumes 19 ein weiteres Herausführen des Gegenstandes 12 durch die Ausgangsöffnung 22 oder ein Einziehen in den Speicherraum 19 verhindert und darüber hinaus eine definierte Position des Anfangs 31 des Gegenstandes 12 für eine nachfolgende automatische Bearbeitung sichergestellt ist. Alternativ oder zusätzlich zur Transportvorrichtung 28 kann sowohl am Eingang als auch am Ausgang eine Halte- oder Klemmvorrichtung vorgesehen sein. Diese Klemmvorrichtung kann separat zum Gehäuse 14 positioniert oder direkt am Gehäuse 14 befestigt oder integriert sein.

Der Speicherraum 19, dessen Innenwandabschnitte bevorzugt eine gut gleitfähige Oberfläche aufweisen, wird in der Höhe derart eingestellt, dass diese geringfügig größer als der Durchmesser des Gegenstandes 12 ausgebildet ist. Die Eingangsöffnung 21 und Ausgangsöffnung 22 grenzen tangential am Boden 16 an. Die Abdeckung 18 ist bevorzugt analog dazu ausgerichtet. Für unterschiedliche Durchmesser des Gegenstandes 12 können die Eingangsöffnungen 21 und 22 durch entsprechend austauschbare Führungshülsen angepasst werden. Alternativ werden die seitlichen Wandabschnitte 17 ausgewechselt, welche unterschiedliche Durchmesser für die Eingangs- und Ausgangsöffnung 21, 22 umfassen.

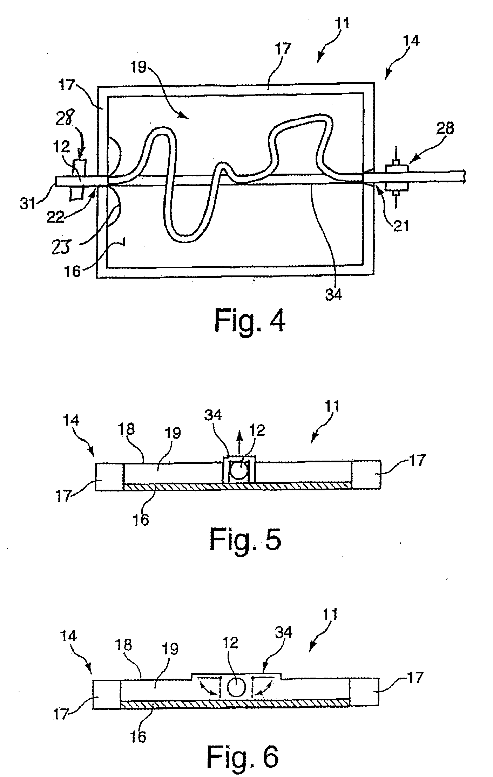

Ein solcher Speicher 11 ermöglicht einen Einsatz in einer automatischen Konfektionierung von schlauch- oder kabelförmigen Gegenständen 12 als Zwischenspeicher, der nach dem First-In-Last-Out-Prinzip arbeitet. In diesem Fall wird über die Transportvorrichtung 28 ein Anfang 31 des Gegenstands 12 durch die Einführöffnung 21 dem Speicherraum 19 zugeführt. Im Anschluss daran folgt eine beliebige Anordnung des Gegenstandes 12 in dem Speicherraum 19, wie dies beispielsweise in Figur 4 dargestellt ist. Nachdem eine vorbestimmte Länge des Gegenstandes 12 in dem Speicherraum 19 vorgesehen ist, wird der Gegenstand 12 beispielsweise durch eine nicht näher dargestellte Schneideinrichtung abgetrennt. Das Ende des Gegenstandes 12 ist durch die Transportvorrichtung 28 oder eine Klemmvorrichtung gehalten. Sofern der Speicher 12 nach dem Zwischenspeichern an einen anderen Einsatzort verlagert werden soll, ist am Gehäuse 14 eine Klemmvorrichtung vorgesehen. Sofern über die Transportvorrichtung 28 eine Entnahme des zwischengespeicherten Gegenstandes 12 erfolgen soll, kann die Schneidvorrichtung zwischen der Transportvorrichtung 28 und der Trommel 29 vorgesehen sein.

Der in den Figuren 1 und 2 beschriebene Speicher 11 ist auch für den Einsatz nach dem First-In-First-Out-Prinzip vorgesehen. In einem solchen Fall wird der Anfang 31 des Gegenstandes 12 nach dem Durchqueren der Eingangsöffnung 21 durch eine Führungsvorrichtung 34, welche in Figur 1 in einer Draufsicht und in Figur 3 in einer Schnittdarstellung dargestellt ist, zur Ausgangsöffnung 22 transportiert und beispielsweise außerhalb der Ausgangsöffnung 22 durch eine Transportvorrichtung 28 oder eine nicht näher dargestellte Klemmvorrichtung gehalten. Durch die der Eingangsöffnung 21 zugeordnete Transportvorrichtung 28 wird der Gegenstand 12 durch eine Schiebebewegung durch die Führungsvorrichtung 34 hindurchgeführt. Nachdem der Anfang 31 des Gegenstandes 12 außerhalb des Gehäuses 14 angeordnet ist, wird die Führungsvorrichtung 34 nach unten abgesenkt, wie dies beispielsweise aus Figur 3 hervorgeht. Dadurch wird der Speicherraum 19 vollständig freigegeben, und durch weiteres Nachschieben des Gegenstandes 12 erfolgt ein Befüllen des Speicherraumes 19, wie dies in Figur 4 dargestellt ist. Nach dem Befüllen des Speicherraumes 19 wird der Gegenstand 12 an der Eingangsöffnung 21 abgeschnitten, wobei dieser durch eine Klemmvorrichtung gehalten werden kann oder mit einer gewissen Restlänge frei aus der Eingangsöffnung 21 herausragt.

Durch die Freigabe des Speicherraumes 19 über eine Absenkbewegung der Führungsvorrichtung 34 befinden sich keinerlei bewegbaren Teile in dem Speicherraum 19, so dass dieser in einfachster Weise ausgebildet ist. Diese Anordnung ermöglicht des Weiteren eine Weiterbearbeitung des Anfangs 31 des Gegenstandes 12 in einer nachgeschalteten Bearbeitungsstation, selbst wenn der Speicherraum noch nicht vollständig gefüllt ist.

In Figur 3 ist die Führungsvorrichtung 34 beispielsweise als U-förmige Rinne ausgebildet, welche mit seitlichen Abschnitten 35 in Schlitzen 38 im Boden 16 angeordnet ist.

In Figur 5 ist eine alternative Anordnung der Führungsvorrichtung 34 zu Figur 3 dargestellt, welche der Abdeckung 18 zugeordnet ist und nach oben abgehoben werden kann. Die Querschnittsgeometrie der Führungsvorrichtung 34 ist dem Grunde nach beliebig, jedoch ist erforderlich, dass der freie Querschnitt der rinnenförmigen Führungsvorrichtung 34 nur geringfügig größer als der Durchmesser des Gegenstandes 12 ist, so dass durch eine Schiebebewegung über die Transportvorrichtung 28 der Gegenstand 12 den Speicherraum 19 durchqueren und zur Ausgangsöffnung 22 gelangen kann.

In Figur 6 ist eine weitere alternative Ausführungsform der Führungsvorrichtung 34 dargestellt. Seitliche Abschnitte 35 der Führungsvorrichtung 34 sind schwenkbar ausgebildet und ermöglichen nach dem Überführen des Anfangs 31 des Gegenstandes 12 zur Ausgangsöffnung 22 eine Freigabe des gesamten Speicherraumes 19. Alternativ können die schwenkbaren Abschnitte auch am Boden 16 vorgesehen sein. Bevorzugt ist die Abdeckung oder der Boden 16 mit einer Vertiefung ausgebildet, so dass die schwenkbaren Abschnitte 35 nach dem Öffnen der Führungsvorrichtung 34 bündig an den Innenwandabschnitten des Bodens 16 oder der Abdeckung 18 anliegen.

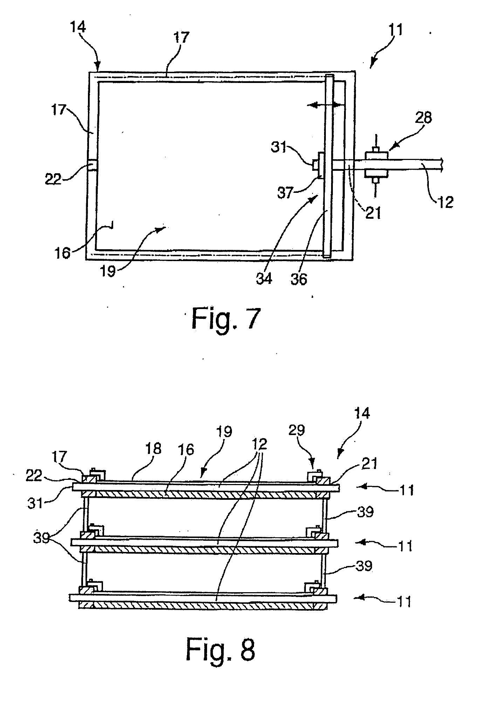

In Figur 7 ist eine weitere alternative Ausführungsform der Führungsvorrichtung 34 dargestellt. Diese umfasst eine Linearachse 36 mit einer Klemmeinrichtung 37. Der Anfang 31 des Gegenstandes 12 wird in der Klemmeinrichtung 37 erfasst und durch eine Verfahrbewegung der Linearachse 36 der Ausgangsöffnung 22 zugeführt. Wenn der Anfang 31 des Gegenstandes 12 in einer definierten Position zur Ausgangsöffnung 22 bevorzugt außerhalb des Gehäuses 14 vorgesehen ist, kehrt die Linearachse 36 in die in Figur 7 dargestellte Ausgangsposition zurück, wodurch wiederum der Speicherraum 19 zum Befüllen freigegeben ist.

In Figur 8 ist eine vorteilhafte Weiterbildung des Speichers 11 dargestellt. Damit diese Speicher 11 als Zwischenspeicher auch ortsunabhängig einsetzbar sind, können diese durch Aufnahmeelemente 39 übereinander stapelbar vorgesehen sein. Diese Aufnahmeelemente 39 sind beispielsweise als Stecksystem ausgebildet, so dass beispielsweise durch am Gehäuse 14 fest angeordnete Bolzen oder Stifte als auch Bohrungen eine einfache Stapelung der Gehäuse 14 ermöglicht ist. Bevorzugt sind der Ein- und Ausgangsöffnung 21, 22 Klemmvorrichtungen zugeordnet, damit die freien, aus der Ein- und Ausgangsöffnung 21, 22 ragenden Enden in der definierten Lage mit einer vorbestimmten Länge für die automatische Weiterverarbeitung gehalten werden.

Die Größe des Speicherraumes 19 beziehungsweise deren Erstreckung in der X-Y-Ebene richtet sich sowohl nach der zu speichernden Länge des Gegenstandes 12 als auch dem Durchmesser. Die Geometrie des Speicherraumes 19 kann an die Steifigkeit des Gegenstandes 12 angepasst werden, so dass insbesondere im Bereich der Ein- und Ausgangsöffnung 21, 22 entsprechende sanfte Übergänge geschaffen sind.

Es liegt auch im Rahmen der Erfindung, dass der Speicher 11 als Zwischenspeicher dient, in dem eine oder mehrere von der Trommel 29 oder beispielsweise aus einem Fass entnommene definierte Längen des schlauch- oder kabelförmigen Gegenstandes 12 bevorratet werden, ohne dass ein Abschneiden des Gegenstandes 12 erfolgt. Dabei sorgt eine mit den Transportvorrichtungen 28 an der Eingangsöffnung 21 und/oder an der Ausgangsöffnung 22 kombinierte Regelungseinrichtung dafür, dass stets eine ausreichende Länge Vorrat des Gegenstandes 12 im Speicherraum 19 verfügbar ist und dass der Speicherraum 19 andererseits aber nicht überfüllt wird.
Beispielsweise kann in einem CrimpCenter auf diese Weise die Durchsatzleistung erheblich erhöht und der Gegenstand 12 spannungsfrei in einer definierten Länge taktgenau entnommen werden. Auch Geschwindigkeitsunterschiede werden auf diese Weise ausgeglichen.

## Patentansprüche

1. Verfahren zum Speichern eines schlauch- oder kabelförmigen Gegenstandes (12),
**dadurch gekennzeichnet,**
- **dass** ein Anfang (31) des schlauch- oder kabelförmigen Gegenstandes (12) durch eine zum Speicherraum (19) führende Eingangsöffnung (21) eingeführt wird,
- **dass** der schlauch- oder kabelförmige Gegenstand (12) in dem Speicherraum (19), dessen Höhe auf den Durchmesser des zu speichernden Gegenstandes (12) zur einlagigen Aufnahme eingestellt ist, in einer beliebigen schlaufenförmigen und einlagigen Anordnung zu dessen Speicherung aufgenommen wird und
- **dass** das Ende des schlauch- oder kabelförmigen Gegenstandes (12) durch eine an der Eintrittsöffnung (21) zugeordnete Klemmvorrichtung oder Transportvorrichtung (28) fixiert wird.

2. Verfahren zum Speichern eines schlauch- oder kabelförmigen Gegenstandes (12),
**dadurch gekennzeichnet,**
- **dass** ein Anfang (31) des schlauch- oder kabelförmigen Gegenstandes (12) durch eine zum Speicherraum (19) führende Eingangsöffnung (21) eingeführt wird,
- **dass** der Anfang (31) des schlauch- oder kabelförmigen Gegenstandes (12) nach dem Durchqueren der Eingangsöffnung (21) von einer Führungsvorrichtung (34) einer Ausgangsöffnung (22) des Speicherraumes (19) zugeführt wird,
- **dass** der Anfang (31) des schlauch- oder kabelförmigen Gegenstandes (12) durch eine der Ausgangsöffnung (22) zugeordnete Klemmeinrichtung oder Transportvorrichtung (28) zur Ausgangsöffnung (22) fixiert wird und
- **dass** der schlauch- oder kabelförmige Gegenstand (12) in dem Speicherraum (19), dessen Höhe auf den Durchmesser des zu speichernden schlauch- oder kabelförmigen Gegenstandes (12) zur einlagigen Aufnahme eingestellt ist, in einer beliebigen schlaufenförmigen und einlagigen Anordnung zu dessen Speicherung aufgenommen wird.

3. Verfahren nach Anspruch 2,
**dadurch gekennzeichnet,**
**dass** ein Ende des schlauch- oder kabelförmigen Gegenstandes (12) durch eine an der Eingangsöffnung (21) angeordnete Klemmeinrichtung oder Transportvorrichtung (28) fixiert wird.

4. Verfahren nach Anspruch 2,
**dadurch gekennzeichnet,**
**dass** die Führungsvorrichtung (34), nachdem der Anfang (31) des schlauch- oder kabelförmigen Gegenstandes (12) zur Ausgangsöffnung (22) fixiert wurde, aus dem Speicherraum (19) herausgeführt wird.

5. Verfahren nach Anspruch 2,
**dadurch gekennzeichnet,**
**dass** der Speicherraum (19) mit dem schlauch- oder kabelförmigen Gegenstand (12) durch eine Transportvorrichtung (28) befüllt wird.

6. Verfahren nach Anspruch 1 oder 2,
**dadurch gekennzeichnet,**
**dass** während dem Befüllen des Speicherraumes (19) die Länge des schlauch- oder kabelförmigen Gegenstandes (12) erfasst wird.

7. Verfahren nach Anspruch 1 oder 2,
**dadurch gekennzeichnet,**
**dass** nach dem Befüllen des Speicherraumes (19) der schlauch- oder kabelförmige Gegenstand (12) auf eine vorbestimmte Länge abgeschnitten werden kann.

8. Speicher für schlauch- oder kabelförmige Gegenstände (12) mit einem Gehäuse (14), welches einen Speicherraum (19) umfasst, insbesondere zur Durchführung des Verfahrens nach einem der Ansprüche 1 bis 7,
**dadurch gekennzeichnet,**
- **dass** der Speicherraum (19) aus einem Boden (16), seitlichen Wandabschnitten (17) und einer Abdeckung (18) gebildet ist,
- **dass** in den seitlichen Wandabschnitten (17) des Gehäuses (14) zumindest eine Eingangs- und zumindest eine Ausgangsöffnung (21, 22) für die Zuführung und Entnahme des schlauch- oder kabelförmigen Gegenstandes (12) vorgesehen ist,
- **dass** der Speicherraum (19) einen ebenen Boden (16) aufweist, der durch die seitlichen Wandabschnitte (17) begrenzt ist und eine parallel zum Boden (16) angeordnete Abdeckung (18) umfasst und die Höhe des Speicherraumes (19) an den Außendurchmesser des zu speichernden schlauch- oder kabelförmigen Gegenstandes (12) zu dessen einlagigen Speicherung anpassbar ist.

9. Speicher nach Anspruch 8,
**dadurch gekennzeichnet,**
**dass** dem Speicherraum (19) eine Führungsvorrichtung (34) zugeordnet ist, welche einen die Eingangsöffnung (21) des Speicherraumes (19) durchquerenden Anfang (31) des schlauch- oder kabelförmigen Gegenstandes (12) zur Ausgangsöffnung (22) führt und vorzugsweise nach dem Zuführen des Anfangs (21) des schlauch- oder kabelförmigen Gegenstandes (12) zur Ausgangsöffnung (22) den Speicherraum (19) freigibt.

10. Speicher nach Anspruch 9,
**dadurch gekennzeichnet,**
**dass** die Führungsvorrichtung (34) als Rinne, insbesondere als U-, V- oder halbkreisförmige Rinne, ausgebildet ist.

11. Speicher nach Anspruch 9,
**dadurch gekennzeichnet,**
**dass** die Führungsvorrichtung (34) durch eine Hub- oder Schiebebewegung aus dem Speicherraum (19) herausführbar ist.

12. Speicher nach Anspruch 9,
**dadurch gekennzeichnet,**
**dass** die als Rinne ausgebildete Führungsvorrichtung (34) schwenkbar ausgebildete Seitenwandabschnitte aufweist, welche aus einer den Speicherraum (19) durchquerenden und rechtwinklig zum Boden (16) und zur Abdeckung (18) vorgesehenen Anordnung parallel zum Boden (16) oder zur Abdeckung (18) schwenkbar sind.

13. Speicher nach Anspruch 8,
**dadurch gekennzeichnet,**
**dass** die Führungsvorrichtung (34) eine Linearachse (36) mit einer Klemmeinrichtung (37) aufweist.

14. Speicher nach Anspruch 8,
**dadurch gekennzeichnet,**
**dass** zumindest die Abdeckung (18) oder der Boden (16) zur Einstellung der Höhe des Speicherraumes (19) und zu den seitlichen Wandabschnitten (17) verfahrbar vorgesehen ist.

15. Speicher nach Anspruch 14,
**dadurch gekennzeichnet,**
**dass** zumindest die Abdeckung (18) oder der Boden (16) durch eine Justiervorrichtung (26) in der Höhe zueinander einstellbar sind.

16. Speicher nach Anspruch 8,
**dadurch gekennzeichnet,**
**dass** die Eingangsöffnung (21) des Speicherraumes (19) eine zur Außenseite des Gehäuses (14) weisende trichterförmige Geometrie aufweist.

17. Speicher nach Anspruch 8,
**dadurch gekennzeichnet,**
**dass** die Ausgangsöffnung (22) des Speicherraumes (19) eine in den Speicherraum (19) weisende Einführgeometrie für die Ausgangsöffnung (22) aufweist.

18. Speicher nach Anspruch 8,
**dadurch gekennzeichnet,**
**dass** die Innenwandabschnitte des Speicherraumes (19) aus gut gleitfähigem Material ausgebildet oder mit einer Gleitschicht beschichtet sind.

19. Speicher nach Anspruch 8,
**dadurch gekennzeichnet,**
**dass** am Gehäuse (14) Aufnahmeelemente (39) vorgesehen sind, welche in komplementäre Aufnahmeelemente (39) eines darunter oder darüber angeordneten Gehäuses (14) zur stapelbaren Anordnung eingreifen.
